# EUROPÄISCHE PATENTSCHRIFT

(11) **EP 3 917 152 B1**
(45) Veröffentlichungstag und Bekanntmachung des Hinweises auf die Patenterteilung: **31.01.2024**
(21) Anmeldenummer: 21174847.0
(22) Anmeldetag: 19.05.2021
(51) Int. Cl.: H04Q 9/00, H04W 56/00

(54) **VERFAHREN ZUM ÜBERTRAGEN VON DATEN ZWISCHEN EINEM KNOTEN UND EINER BASISSTATION IN EINEM KOMMUNIKATIONSSYSTEM SOWIE KOMMUNIKATIONSSYSTEM**
METHOD FOR TRANSMITTING DATA BETWEEN A NODE AND A BASE STATION IN A COMMUNICATION SYSTEM AND COMMUNICATION SYSTEM
PROCÉDÉ DE TRANSMISSION DE DONNÉES ENTRE UN NOEUD ET UNE STATION DE BASE DANS UN SYSTÈME DE COMMUNICATION, AINSI QUE SYSTÈME DE COMMUNICATION

(30) Priorität: 30.05.2020 DE 102020003291
(43) Veröffentlichungstag der Anmeldung: 01.12.2021
(73) Patentinhaber: Diehl Metering Systems GmbH, 90451 Nürnberg (DE)
(72) Erfinder: Petkov, Hristo, 90425 Nürnberg (DE); Weiss, Karolin, 90489 Nürnberg (DE); Kauppert, Thomas, 90455 Nürnberg (DE)
(74) Vertreter: Diehl Patentabteilung

(56) Entgegenhaltungen:
- EP-A1- 1 791 100
- EP-A1- 3 579 624
- WO-A1-2021/028249
- DE-A1-102016 014 375
- US-A1- 2012 220 351

## Beschreibung

Die vorliegende Erfindung betrifft ein Verfahren zum Übertragen von Daten zwischen zumindest einem Knoten und einer Basisstation mit unidirektionalem oder bidirektionalem Funkübertragungsbetrieb. Die Erfindung betrifft ferner ein entsprechendes Kommunikationssystem. Die Erfindung eignet sich beispielsweise für den Einsatz bei der Erfassung des Verbrauchs von Wärme bzw. Energie, Strom, Gas oder Wasser durch autarke Verbrauchsmessgeräte.

### Technologischer Hintergrund

Knoten eines Kommunikationssystems wie z. B. intelligente Verbrauchsmessgeräte sind üblicherweise lokalen Positionen wie z. B. jeweils Wohneinheiten oder Wohnhäusern zugeordnet. Die dort anfallenden Messdaten können auf unterschiedlichste Weise ausgelesen werden. Messdaten können z. B. über das Stromnetz (Power Line) ausgelesen werden. Die Einbindung der Verbrauchsmessgeräte in ein überörtliches Netzwerk ist hierbei allerdings nicht möglich. Ferner können Messdaten mittels Mobilfunktechnologie in Form von Datenpaketen oder Telegrammen übertragen werden. Dies ist allerdings teuer, setzt die Installation von Mobilfunkmodulen an den Verbrauchsmessgeräten voraus und hat Nachteile betreffend den hohen Stromverbrauch an den einzelnen Verbrauchsmessgeräten. Ferner können Messdaten in Form von Datenpaketen oder Telegrammen auch per Funk, beispielsweise im ISM (Industrial, Scientific, Medical)-Band-Frequenzbereich oder im SRD (Short Range Devices)-Band-Frequenzbereich, übertragen werden. Diese Frequenzbereiche haben den Vorteil, dass von den Betreibern lediglich eine allgemeine Zulassung der Frequenzverwaltung notwendig ist. Allerdings besteht das Problem, dass aufgrund der Häufigkeit der Verwendung derartiger Frequenzbereiche für unterschiedlichste technische Einrichtungen wie etwa Garagentorsteuerungen, Babyphones, Alarmanlagen, WLAN, Bluetooth, Rauchwarnmelder usw. es häufig zu Störungen kommen kann. Das Sammeln der Messdaten per Funk erfolgt entweder durch ortsfeste oder mobile Datensammler (Basisstationen oder Kollektoren), an die die in den Sendern der Verbrauchsmessgeräte bereitgestellten Messdaten übertragen werden.

Beispielsweise werden von Verbrauchsmessgeräten Messdaten in bestimmten, sehr kurzen Stichzeiträumen (Stichzeit bzw. Stichzeitpunkt inklusive Zeitabweichung) an einen Datensammler übertragen und die in diesen Stichzeiträumen empfangenen Messdaten für eine Verbrauchsauswertung herangezogen.

Eine Schwierigkeit besteht hierbei darin, dass Kommunikationssysteme zwischen Datensammler und Verbrauchsmessgeräten eine sehr genaue Zeitsynchronisation zwischen den im Bereich der Verbrauchsmessgeräte befindlichen Kommunikationsmodulen und demjenigen des Datensammlers benötigen. Für Kommunikationsmodule autonomer Verbrauchsmessgeräte werden als Frequenzgeber (mit der Funktion einer Frequenzreferenzeinrichtung) einfache Quarze mit geringem Stromverbrauch eingesetzt. Derartige Quarze weisen aufgrund von Fertigungstoleranzen, Temperaturverhalten und Alterung Quarzfehler von ca. 10 - 100 ppm auf. Beispielsweise führt bei einem Standardquarz ein Quarzfehler von 50 ppm zu einer Abweichung von 4,3 Sekunden pro Tag bzw. 26 Minuten pro Jahr. Daraus wiederum resultiert eine zunehmende Abweichung der Zeitsynchronisation mit der Folge eines sich zunehmend verschlechternden Empfangsverhaltens.

### Druckschriftlicher Stand der Technik

Ein Verfahren gemäß dem Oberbegriff des Anspruchs ist aus der DE 10 2005 020 349 B4 bekannt. Bei dem dort beschriebenen Verbrauchserfassungssystem besitzen die Verbrauchsmessgeräte einen ersten Zeittaktgeber (Uhrzeittaktgeber) mit niedrigerem Stromverbrauch für den Dauerbetrieb sowie einen zweiten Taktgeber mit höherer Frequenzstabilität und höherem Stromverbrauch, welcher lediglich in kurzen Aktivierungsphasen betrieben wird. Gemäß der dort beschriebenen Idee wird im Verbrauchsmessgerät während der kurzen Aktivierungsphasen des zweiten Taktgebers die Frequenz, die Periodendauer oder eine daraus abgeleitete Größe als ein Taktmaß des ersten Zeittaktgebers auf der Basis eines vom zweiten Zeittaktgeber abgeleiteten Vergleichsmaßstabs erfasst und die ackumulierte Zeit des ersten Zeittaktgebers in Abhängigkeit der festgestellten Abweichung korrigiert. Daraus resultiert, dass der zeitliche Fehler dann dem zeitlichen Fehler des zweiten Taktgebers des Verbrauchsmessgeräts entspricht.

Die EP 1 791 100 A1 beschreibt ein Funkübertragungssystem mit einem Funkempfänger, der einen automatischen Funkempfangsfrequenz-Suchlauf mit abnehmender Funkempfangssuchfrequenz in den Empfangsbereitschafts-Zeitintervallen durchführt, um die Funkempfangsfrequenz des Funkempfängers auf die Funksendefrequenz des Funksenders abzustimmen. Hierbei hängen die Suchlaufstartfrequenz und die zeitliche Abnahmerate der Empfangsfrequenz beim Suchlauf von der Zeit seit dem letzten auswertbaren Empfang eines Funktelegramms von dem betreffenden Funksender ab.

Die EP 3 579 624 A1 beschreibt ein Verfahren zur Bestimmung des Abtastratenfehlers für ein Funkübertragungssystem mit Frequenzsprungverfahren. Der Abtastratenfehler wird durch einen zeitlichen Korrekturfaktor behoben, damit die Abtastungen des Verbrauchszählers und der Basisstation aufeinander fallen und der Verbrauchszähler in der Frequenz verschoben werden kann.

Die WO 2021/028249 A1 offenbart ein Verfahren zum Übertragen eines in eine Vielzahl von Datenpaketen aufgeteilten Funktelegramms, wobei eine Korrektur des Sendezeitpunkts und/oder der Trägerfrequenz stattfindet. Hierbei wird ein Datenpaket des Knotens von der Basisstation empfangen, wobei die Abweichung zwischen dem ersten Frequenzgeber des Knotens und dem ersten Frequenzgeber der Basisstation mittels einer Frequenzschätzung ermittelt und abgespeichert wird.

Die DE 10 2016 014 375 Aloffenbart ein Verfahren zu Verbesserung der Übertragungsqualität zwischen einem Datensammler und einer Mehrzahl von Verbrauchsmessgeräten. Hierbei kann eine Abweichung bzw. ein Frequenzunterschied zwischen den Frequenzreferenzeinrichtungen des Verbrauchsmessgeräts bestimmt werden.

Die US 2012/0220351 A1 beschreibt einen Sende-/Empfangseinrichtung für die Bluetooth-Kommunikation.

### Aufgabe der vorliegenden Erfindung

Die Aufgabe der vorliegenden Erfindung besteht darin, ein neuartiges Verfahren sowie eine Basisstation vorzuschlagen, mit dem bzw. der der zeitliche Fehler weiter reduziert oder idealerweise beseitigt werden kann.

### Lösung der Aufgabe

Die vorstehende Aufgabe wird bei dem erfindungsgemäßen Verfahren durch die Merkmale des Anspruchs 1 gelöst. Zweckmäßige Ausgestaltungen des erfindungsgemäßen Verfahrens bzw. Kommunikationssystems sind in den abhängigen Ansprüchen wiedergegeben.

Erfindungsgemäß erfolgt eine Kalibrierung des Fehlers oder der Abweichung zwischen der Frequenz des ersten Frequenzgebers des jeweiligen Knotens und der Frequenz des ersten Frequenzgebers der Basisstation.

Erfindungsgemäß erwartet die Basisstation das Datenpaket von dem Knoten auf einer Trägerfrequenz. Erfindungsgemäß schätzt sie dafür aus dem empfangenen Paket die Trägerfrequenz und stellt daraus die Abweichung der beiden Frequenzen, die durch die jeweils ersten Frequenzgeber (HF Quarze) der Basisstation und des Knotens bedingt sind, fest.

Erfindungsgemäß speichert die Basisstation hierzu fortlaufend die Abweichung zwischen der Frequenz des ersten Frequenzgebers des jeweiligen Knotens und der Frequenz des ersten Frequenzgebers der Basisstation. Normalerweise sind die Zeitgeber bzw. Frequenzgeber für Taktfrequenzen in der Basisstation und im Knoten andere als die Frequenzgeber für die Trägerfrequenz. Die Zeitgeber Taktfrequenz kann mit der Frequenzgeber Taktfrequenz verglichen oder abgeglichen werden. Damit stehen die Frequenzen oder die Geschwindigkeiten der unterschiedlichen Taktgeber in einer bekannten Beziehung. Damit können bisher noch vorherrschende Zeitfehler weiter reduziert oder idealerweise sogar völlig eliminiert werden. Dies wiederum führt dazu, dass die Empfangsfenster der Basisstation in ihrer Größe weiter reduziert werden können. Das Sende- und Empfangsteil der Basisstation muss daher nicht solange eingeschaltet sein als bisher. Dies wirkt sich wiederum vorteilhaft auf den Stromverbrauch aus. Kalibriert wird die Frequenz (durch Ausgleich einer Frequenzverschiebung) bzw. der Zeitversatz bzw. die Taktmaßabweichung des Frequenzgebers. Die Kalibrierung der Basisstation erfolgt für die Knoten fortlaufend jeweils nach dem Empfang von Datenpaketen der einzelnen Knoten.

In Abhängigkeit der Kalibrierung kann das jeweilige Empfangsfenster hinsichtlich seiner Lage und/oder seiner Länge besonders genau festgelegt und/oder angepasst werden. Hierdurch wird zum einen die Empfangsqualität erhöht zum anderen der Energieverbrauch reduziert.

Die Erfindung ermöglicht es, die Größe des Empfangsfensters wirksam zu reduzieren, insbesondere derart, dass das Empfangsfenster die dreimalige Länge des in dem Empfangsfenster zu empfangenden Datenpakets nicht übersteigt.

Vorzugsweise kann von der Basisstation innerhalb des Empfangsfensters, vorzugsweise von der Mitte desselben aus, eine Suche nach dem Paket vor und/oder zurück gestartet werden, bis das betreffende Paket gefunden ist. Der jeweils festgestellte Abstand kann abgespeichert werden. In Abhängigkeit des Ergebnisses der Suche kann die Lage und/oder die Länge des Empfangsfensters verändert werden.

Vorzugsweise kann eine Suche bei mehreren Empfangsfenstern und/oder Paketen nacheinander durchgeführt wird, wobei die Ergebnisse der Suche in Relation zueinander gesetzt werden. Hierdurch kann beispielsweise beim nächsten Empfang ein kleineres Empfangsfenster geöffnet werden, wenn bei den letzten n (z. B. 10) Suchen ein festgelegter zeitlicher Abstand von dem Ausgangspunkt nach vorne oder zurück nicht überschritten worden ist.

Gemäß einer zweckmäßigen Ausgestaltung kann auch die Basisstation einen zweiten Frequenzgeber aufweisen, der wie bei jedem einzelnen Knoten als Zeitquarz dient und eine niedrigere Frequenz sowie üblicherweise einen größeren Fehler als der erste Frequenzgeber aufweist. In diesem Fall kann vorteilhaft eine Kalibrierung des zweiten Frequenzgebers der Basisstation auf der Grundlage der Kalibrierung des ersten Frequenzgebers der Basisstation erfolgen. Die Basisstation speichert die Abweichung ebenfalls ab.

Auch die Basisstation kann gemäß einer vorteilhaften Ausgestaltung der Erfindung mittels einer energieautarken Energiequelle, vorzugsweise mittels einer Batterie betrieben werden. Derartige Basisstationen gehen ähnlich wie ein Knoten normalerweise in einen Sleepzustand und schalten sich lediglich zu bestimmten Zeiten ein (Empfangsfenster), um Daten von den Knoten zu empfangen. Die autarke Nutzungsdauer einer Basisstation mit einer solchen Energiequelle kann bis zu 5 bis 7 Jahre betragen. Gerade bei sehr engmaschigeren Funknetzwerken (loT-Netzwerke) werden derartig betriebene Basisstationen von ganz besonderer Bedeutung sein.

Als energieautarke Energiequelle wird vorzugsweise eine solche verwendet, die eine Kapazität von maximal 80 Ah aufweist.

Der Basisstation sind die jeweiligen Sendezeitpunkte der Knoten bekannt. Beispielsweise können diese mittels einer Pseudozufallssequenz (z. B. mittels PRBS) erzeugt werden.

Die Dauer der Kalibrierung des zweiten Frequenzgebers in der Basisstation kann länger sein als die Kalibrierung des zweiten Frequenzgebers im jeweiligen Knoten. Hierdurch ergibt sich insgesamt ein reduzierter Kalibrierungsrestfehler.

Ein nachfolgendes Empfangsfenster wird, was die Kalibrierung anbelangt, vorzugsweise auf das Vorhergehende bezogen. Hierdurch wird eine Fehlerfortpflanzung vermieden.

Ferner kann für die Festlegung des Öffnungszeitpunktes des Empfangsfensters der Basisstation zusätzlich die Temperaturabhängigkeit des ersten Frequenzgebers und/oder zweiten Frequenzgebers der Basisstation und/oder des Knotens mitberücksichtigt werden.

Insbesondere kann die Kalibrierung zwischen der Frequenz des ersten Frequenzgebers des Knotens und der Frequenz des ersten Frequenzgebers der Basisstation auf Basis einer Schätzung mindestens eines Parameters des vom Kommunikationsmodul des Knotens ausgesendeten und vom Kommunikationsmodul der Basisstation empfangenen Funksignals aus folgender Parameter-Gruppe
Trägerfrequenz und/oder
Bandbreite und/oder
Datenrate und/oder
Empfangszeit zwischen zwei Datenpaketen und/oder
Frequenzhub und/oder
Modulationsindex
durch das Kommunikationsmodul in der Basisstation ermittelt werden.

Beispielsweise kann eine Schätzung auch auf Basis mehreren solcher Parameter z. B. auf Basis der Differenz zwischen zwei Trägerfrequenzen oder Empfangszeiten oder auf Basis einer gewichteten Mittelung mehrerer Werte wie z. B. auf Basis einer Filterung von N Trägerfrequenzen vorgenommen werden.

### Beschreibung der Erfindung anhand von Ausführungsbeispielen

Nachstehend werden besondere Ausgestaltungen der vorliegenden Erfindung unter Bezugnahme auf Zeichnungsfiguren näher erläutert. Wiederkehrende Merkmale sind der Übersichtlichkeit halber lediglich einmal mit einem Bezugszeichen versehen. Es zeigen:
- Fig. 1: eine stark vereinfachte schematische Darstellung eines Beispiels eines Kommunikationsnetzwerks mit einer Basisstation und mehrerer zugehöriger Knoten;
- Fig. 2: eine stark vereinfachte Darstellung eines Beispiels einer Basisstation für ein Kommunikationsnetzwerk gemäß Fig. 1;
- Fig. 3: eine stark vereinfachte schematische Darstellung des Kalibrierungs-Grundprinzips der vorliegenden Erfindung;
- Fig. 4: eine beispielhafte schematische Darstellung eine Empfangsfensters der Basisstation sowie mehrerer Datenpakete mit unterschiedlicher Lage zum Empfangsfenster; sowie
- Fig. 5: eine beispielhafte schematische Darstellung der Anpassung des Empfangsfensters nach Empfang mehrerer Datenpakete.

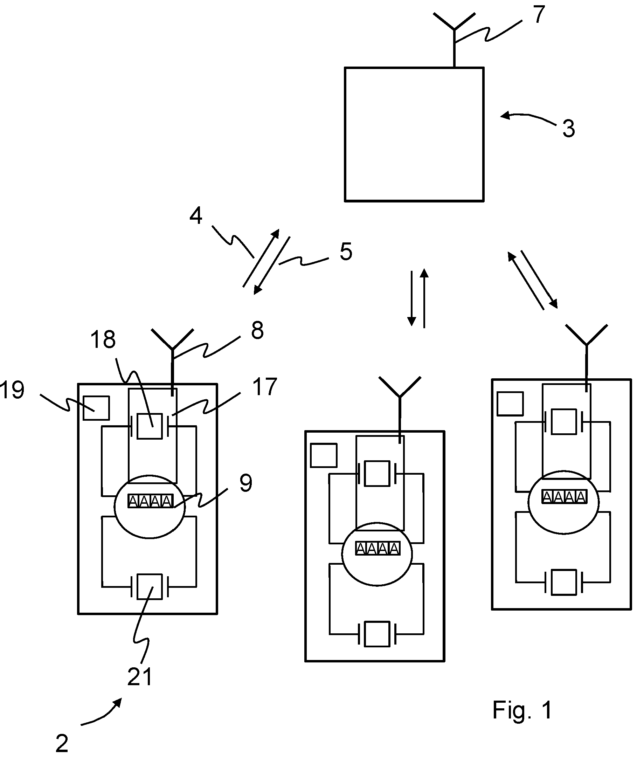

Bezugsziffer 1 in Fig. 1 bezeichnet ein Funkkommunikationssystem bzw. Funckommunikationsnetzwerk, welches eine Basisstation 3, z.B. einen sogenannten Datensammler, sowie eine Mehrzahl von einzelnen, autark betriebenen Knoten 2 umfasst. Bei den Knoten 2 handelt es sich beispielsweise um Sensoreinrichtungen, Zähler jeglicher Art, beispielsweise Wasserzähler, Wärmezähler, Gaszähler oder Stromzähler, oder um Aktoren. Gemein ist diesen Knoten 2, dass sie über ein Kommunikationsmodul 17 mit Antenne 8 sowie eine Steuer- und Recheneinheit 19 verfügen. Des Weiteren verfügt jeder Knoten 2 über einen ersten Frequenzgeber 18 zur Erzeugung einer Trägerfrequenz für die Funkübertragung sowie einen zweiten Frequenzgeber 21, welcher der zur Festlegung der Zeitpunkte der Aussendung der Datenpakete dient. Bei dem ersten Frequenzgeber 18 handelt es sich um einen HF(Hochfrequenz)-Quarz, welcher üblicherweise einen Fehler in der Größenordnung von 20 ppm aufweist. Demgegenüber handelt es sich bei dem zweiten Frequenzgeber 21 um einen LF(Niederfrequenz)-Quarz, auch Zeitquarz genannt, welcher typischerweise einen Fehler in der Größenordnung von 100 ppm aufweist. Dies entspricht einem zeitlichen Fehler von 100 µs/sek.

Der zweite Frequenzgeber 21 des Knotens 2 muss aufgrund der Zeitmess- bzw. Zeitgeberfunktion immer aktiv sein, wohingegen der erste Frequenzgeber 18 lediglich im Sendebetrieb und/oder Empfangsbetrieb aktiviert sein muss. Ansonsten befindet er sich in einem Sleepmodus. Jeder Knoten 2 wird energieautark betrieben, d.h. verfügt über eine autarke Energiequelle, über die die einzelnen Funktionseinheiten des Knotens 1 mit Energie versorgt werden.

Jeder Knoten 2 kann beispielsweise, falls dies gewünscht ist, auch mit einer Anzeige 9 versehen sein.

Das Funkkommunikationssystem 1 gemäß Fig. 1 kann unidirektional oder bidirektional betrieben werden. Beim unidirektionalen Betrieb werden Datenpakete 4 von dem jeweiligen Knoten 2 an die Basisstation 3 übertragen und dort über deren Antenne 7 empfangen. Bei der bidirektionalen Übertragung werden Datenpakete 5 von der Basisstation an jeden einzelnen Knoten 2 übertragen und von deren Antennen 8 empfangen.

Vorzugsweise wird für die Datenübertragung das SRD-Band oder das ISM-Band verwendet, welche lizenzfrei Frequenzbandbreiten für verschiedenste Anwendungen ermöglichen.

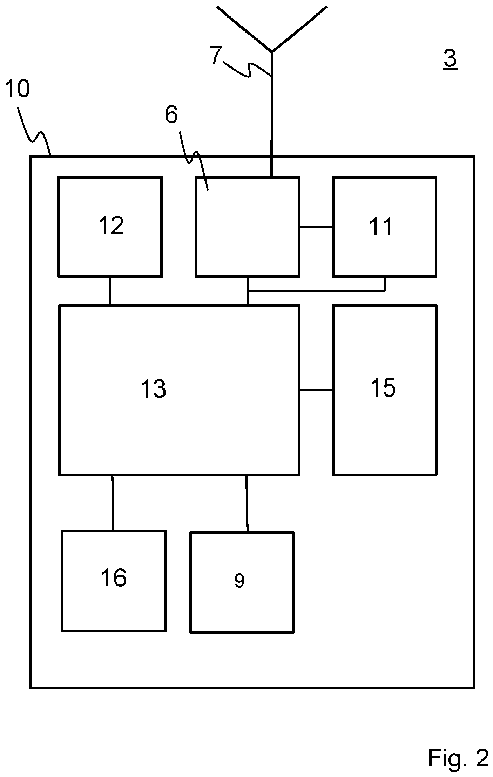

Fig. 2 zeigt in stark vereinfachter schematischer Darstellungsweise einen beispielhaften Aufbau einer energieautark betriebenen Basisstation 3 des Kommunikationssystems 1 gemäß Fig. 1. Die Basisstation 3 umfasst ein Sende- und Empfangsteil 6 mit einer Antenne 7 sowie einen Mikroprozessor 13, welcher über einen Speicher 15 verfügt und die Anzeige 9 ansteuert.

Des Weiteren verfügt die Basisstation 3 über einen ersten Frequenzgeber 11 in Form eines HF(Hochfrequenz)-Quarzes sowie einen zweiten Frequenzgeber 12 in Form eines LF(Niederfrequenz)-Quarzes. Der zweite Frequenzgeber 12 dient zur Zeiterfassung und ist deshalb analog zu dem zweiten Frequenzgeber 21 des jeweiligen Knotens 2 stets aktiv. Der zweite Frequenzgeber 12 besitzt typischerweise ebenfalls einen Fehler in der Größenordnung 100 ppm. Der Fehler des ersten Frequenzgebers 11 liegt im Bereich von 20 ppm.

Demgegenüber ist der erste Frequenzgeber 11 analog dem ersten Frequenzgeber 18 des jeweiligen Knotens 2 lediglich zu Zeiten aktiviert, in denen das Sende- und Empfangsteil 6 ein Empfangsfenster zum Empfang von Datenpaketen 4 der jeweiligen Knoten 2 öffnet.

Bei der Energiequelle 16 handelt es sich vorzugsweise um eine Batterie, insbesondere um eine Batterie mit einer Kapazität von max. 80 Ah. Um mit einer solchen Energiequelle eine autarke Betriebsdauer über mehrere Jahre zu erreichen, darf die Basisstation 3 nicht immer aktiviert sein. Die Basisstation 3 bzw. dessen Sende- und Empfangsteil 6 sollte lediglich dann aktiviert sein, also ein Empfangsfenster bilden, wenn der jeweilige Knoten 2 Datenpakete 4 an die Basisstation 3 übermittelt. In den restlichen Zeiträumen sollte das Sende- und Empfangsteil 6 des Kommunikationsmoduls 10 der Basisstation 3 sich in dem Sleepmodus befinden.

Ein für den zweiten Frequenzgeber 21 einzusetzender Zeitquarz hat typischerweise einen Fehler in der Größenordnung von 100 ppm. Dies entspricht einem zeitlichen Fehler von 100 µs/sek. Unter der Annahme, dass das nächste Datenpaket in einer Stunde kommen wird, ergibt dies über die Dauer einer Stunde einen Fehler von 360 ms (60 x 60 x 100 µs). Ein Datenpaket ist ungefähr 10 ms lang. Der Overhead nach einer Stunde wäre dann ca. 3.600 %.

Die Kalibrierung des Zeitquarzes in der DE 10 2005 020 349 B4 ergibt typischerweise einen Restfehler in der Größenordnung von 20 ppm. Dieser Fehler wäre somit fünf Mal kleiner als der eingangs genannte Fehler und ergäbe einen Fehler von 72 ms oder 720 % der Länge des Datenpakets von 10ms.

Mit der vorliegenden Erfindung wird nun eine weitere Verbesserung hinsichtlich der Fehlerkorrektur in der Basisstation möglich.

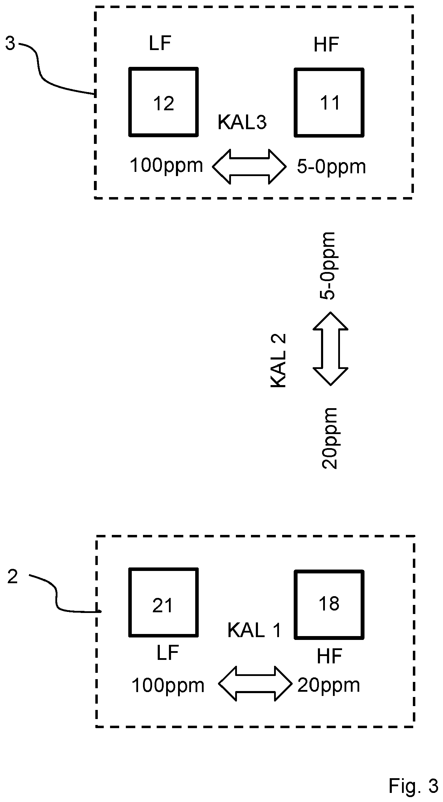

Fig. 3 zeigt im Bereich des Knotens 2 eine Kalibrierung KAL1, mit der in der DE 10 2005 020 349 B4 beschriebenen Verfahrensweise die Abweichung im Knoten zwischen dem zweiten Frequenzgeber 21 und dem ersten Frequenzgeber 18 von ca. 100 ppm auf 20 ppm reduziert werden kann.

Gemäß der vorliegenden Erfindung wird im Rahmen einer weiteren Kalibrierung KAL2 beim Empfang eines Datenpaktes 4 des jeweiligen Knoten 2 eine Kalibrierung zwischen dem ersten Frequenzgeber 11 der Basisstation 3 und dem ersten Frequenzgeber 18 des jeweiligen Knotens 2 vorgenommen und in der Basisstation 3 abgespeichert. Hierdurch kann der Fehler in der Basisstation 3 von 20 ppm deutlich reduziert werden, nämlich theoretischer Weise auf einen Fehler von 0 ppm. Da jedoch das Kalibrierungsverfahren in der praktischen Umsetzung lediglich eine endliche Genauigkeit aufweist (beispielsweise aufgrund von Temperaturschwankungen und dergleichen) ist realistisch eine Reduzierung auf einen Bereich von 5-0 ppm anzustreben.

Die durch das erfindungsgemäße Verfahren erreichte zusätzliche Steigerung der Genauigkeit entspricht daher nochmals einem Faktor von mindestens 4.

Gemäß der Erfindung wird darüber hinaus eine Kalibrierung des zweiten Frequenzgebers 12 der Basisstation 3 und dem ersten Frequenzgeber 11 der Basisstation 3 durchgeführt.

In der praktischen Umsetzung kann das Verfahren mit folgenden Verfahrensschritten durchgeführt werden:
In dem Knoten 2 werden die beiden Frequenzgeber 18 und 21 gegeneinander vermessen und die sich daraus ergebene Frequenzabweichung in einem Speicher des jeweiligen Knotens 2 abgespeichert.

Der betreffende Knoten 2 sendet ein Datenpaket, wobei die Trägerfrequenz durch den ersten Frequenzgeber 18 generiert wird.

Der betreffende Knoten 2 sendet ein Datenpaket, wobei die Zeit von dessen Aussendung durch den zweiten Frequenzgeber 21generiert ist und wobei die gemessene Abweichung ermittelt durch die Kalibrierung KAL 1 dafür berücksichtigt worden ist. Die Aussendung des Datenpakets verhält sich so, als ob der Zeitpunkt von dessen Aussendung durch ersten Frequenzgeber 18 generiert worden wäre.

Ein Datenpaket 4 des Knotens 2 wird von der Basisstation 3 empfangen, wobei mittels einer Frequenzschätzung die Abweichung zwischen dem ersten Frequenzgeber 18 und dem ersten Frequenzgeber 11 der Basisstation 3 ermittelt und abgespeichert wird.

Die Basisstation 3 ermittelt durch Vermessung der Frequenzen des ersten Frequenzgeber s11 der Basisstation 3 und des zweiten Frequenzgebers 12 der Basisstation 3 die Abweichung und speichert auch die Abweichung (z. B. in ppm) ab.

Der jeweilige Knoten 2 sendet das nächste Datenpaket mit einem Korrekturfaktor auf Basis der Abweichung zwischen dem ersten Frequenzgeber 18 des Knotens 2 sowie zweiten Frequenzgebers 21 des Knotens 2. Mit anderen Worten, der Knoten sendet in der Zeit, als ob die Zeit von dem ersten Frequenzgeber 18 des Knotens 2 generiert worden ist.

Da die Festlegung des Zeitpunkts des Empfangsfensters für das nächste Datenpaket in der Basisstation 3 nach der Kalibrierung KAL 3 gemacht wird, könnte das nächste Empfangsfenster auch nur durch den ersten Frequenzgeber 11 generiert werden.

Aufgrund des Empfangs des letzten Datenpakets kennt die Basisstation 3 die Frequenzabweichung zwischen dem ersten Frequenzgeber 11 der Basisstation 3 und dem ersten Frequenzgeber 18 des Knotens 2. Das Empfangsfenster der Basisstation 3 wird so korrigiert, als ob der erste Frequenzgeber 11 mit der gleiche Geschwindigkeit bzw. Frequenz läuft wie der erste Frequenzgeber 18 des Knotens 2. Wenn die Temperatur bis zu dem nächsten Datenpaket konstant bleibt, ist zu erwarten, dass das Empfangsfenster perfekt getroffen wird. In der Praxis ändert sich die Temperatur, so dass es zu Abweichungen um z.B. +- 5 ppm kommen kann abhängig von dem Zeitraum dazwischen.

Die Kalibrierungen KAL1 und KAL 3 sind nicht ideal sondern abhängig von der Kalibrierungslänge. Es bleibt somit ein Genauigkeitsrestfehler der Kalibrierung.

Für das Empfangen des nächsten Datenpakets 4 addiert die Basisstation 3 den durch die Abweichung bedingten Zeitversatz zwischen dem ersten Frequenzgeber 11 der Basisstation 3 und dem ersten Frequenzgeber 18 des Knotens 2 sowie den Zeitversatz zwischen dem ersten Frequenzgeber 11 der Basisstation 3 und dem zweiten Frequenzgeber 12 der Basisstation 3 hinzu.

Die Kalibrierung zwischen dem ersten Frequenzgeber 11 sowie dem zweiten Frequenzgeber 12 der Basisstation wird während der jeweiligen geöffneten Empfangsfenster durchgeführt und kann hierdurch länger dauern als im Knoten 2. Hierdurch kann der Restfehler in der Basisstation 3 weiter reduziert werden.

Mit der Erfindung eliminiert man eine Differenz zwischen den Frequenzen der ersten Frequenzgeber 11 sowie 18.

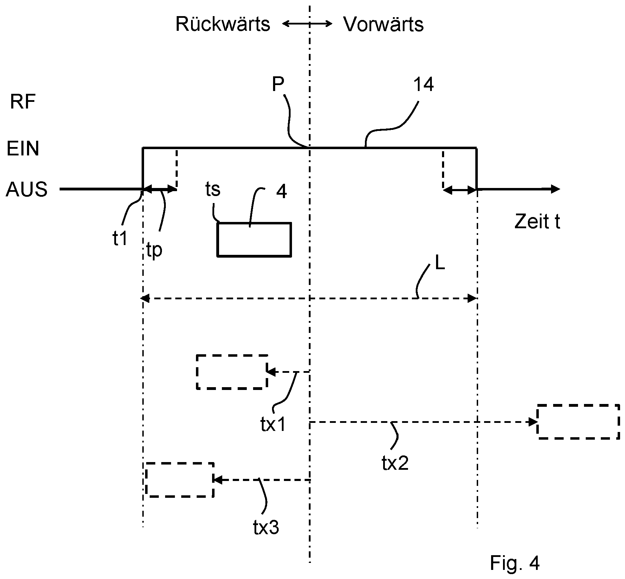

Sofern gemäß Fig. 4 ein Empfangsfenster 14 geöffnet wird, hat dies eine bestimmte Länge L. Der Zeitpunkt der Öffnung des Empfangsfensters 14 ist in Fig. 4 mit t1 gekennzeichnet.

Hinsichtlich der Öffnung des Empfangsfensters 14 werden noch Kalibrierungstoleranzen sowie Frequenzschätzgenauigkeiten berücksichtigt, die durch den zeitlichen Bereich tp am Beginn sowie Ende des Empfangsfensters 14 wiedergegeben sind sowie durch Temperatur.

Die Basisstation 3 kennt den Zeitpunkt, zudem der jeweilige Knoten 2 ein Datenpaket 4 absendet, und öffnet ein Zeitfenster, dessen Mitte der erwarteten Mitte des Datenpakets 4 entspricht. Tatsächlich befindet sich das Datenpaket 4 aber nicht in dieser gewünschten Lage, sondern weicht aufgrund des Zeitfehlers der verschiedenen Frequenzgeber 11, 18, 12 sowie 21 davon ab. Nachdem eine Zeitfenster 14 geöffnet worden ist, wird deshalb zur Suche des betreffenden Datenpakets 4 vorzugsweise von der Mitte des Zeitfensters p sowohl vorwärts als auch rückwärts gezählt, um das betreffende Datenpaket zu finden. Wird z.B. in Fig. 4 rückwärts gezählt, so wird das Datenpaket 4 innerhalb des Empfangsfensters 14 gefunden.

Ebenso würde das mit einem zeitlichen Versatz von tx1 zur Mitte des Empfangsfensters 14 befindliche Datenpaket noch gefunden werden. Gleiches gilt für das Datenpaket mit dem Abstand tx3, welches sich mit seinem Ende noch in dem Toleranzbereich tp befindet. Nicht gefunden würde jedoch das Datenpaket mit dem Abstand tx2, dessen Beginn außerhalb des Empfangsfensters 14 liegt.

Dadurch, dass die jeweiligen Zeitversätze in der Basisstation 3 stets abgespeichert werden und in Anbetracht davon die Länge L des Empfangsfensters 14 dementsprechend kontinuierlich angepasst werden kann, kann im Zuge des Verfahrens eine Verringerung der jeweiligen Länge L des Empfangsfensters 14 und hierdurch eine Reduzierung der Belastung der autarken Energiequelle erreicht werden. Im Übrigen können auch einfachere und günstigere Mikroprozessoren mit weniger Speicherkapazität verwendet werden, da im Rahmen der Ablaufsteuerung lediglich geringere Zeitdifferenzen bzw. Zeitabstände abgespeichert werden müssen.

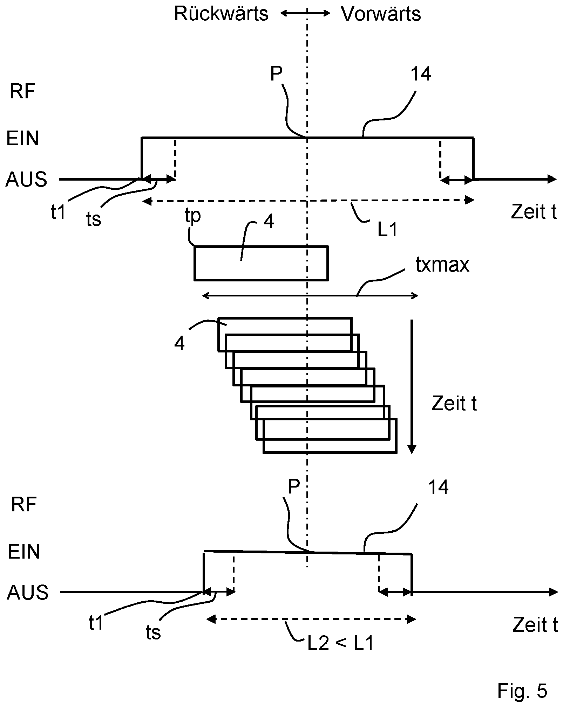

Vorzugsweise wird das Verfahren so durchgeführt, dass beispielsweise anhand des jeweils ermittelten zeitlichen Versatzes jeweils beim Empfang einer Reihe nacheinander folgender Datenpakete dann eine Verkleinerung des Empfangsfensters 14 vorgenommen wird, wenn beispielsweise bei der Suche nach dem Datenpaket 4 innerhalb einer Anzahl n Schätzungen (z.B. 10 Schätzungen) die Suche stets Treffer mit einem zeitlichen Abstand t von < txmax ergibt. Eine entsprechende Reduzierung ist beispielhaft in Fig. 5 dargestellt. Aus der Schar der einzelnen Datenpakete 4, die über die Zeit t nacheinander von der Basisstation 3 empfangen werden, weichen die in Fig. 5 dargestellten Datenpakete nicht von einer Breite von txmax ab, sodass aufgrund dessen eine Reduzierung der Länge L1 des Empfangsfensters 14 auf die Länge L2 durchgeführt werden kann. Durch die Reduzierung des Empfangsfensters 14 wiederum wird der Energieverbrauch reduziert und damit die Betriebslaufzeit der Basisstation 3 verlängert.

Die zukünftige Zeitpunkte der Datenpakete müssen bekannt sein. Hierfür kann der Knoten 2 z.B. zukünftige Zeitpunkte generieren und in seinem Payload diese Zeitpunkte der Basisstation mitteilen. Die Zeitpunkte können auch pseudozufällig festgelegt sein, wie z.B. bei einer sogenannten PRBS-Sequenz.

Für die Öffnung des Empfangsfensters 14 zum Zeitpunkt t1, vgl. Fig. 4 sowie Fig. 5, kann zusätzlich auch die Temperaturabhängigkeit der ersten sowie zweiten Frequenzgeber der Basisstation 3 und/oder der Knoten 2 mitberücksichtigt werden.

Durch mehrere Frequenzschätzungen kann man einen Kurvenverlauf der Quarzfrequenz aufnehmen und durch Filter den Frequenzverlauf nachbilden. Man kann auch adaptiv die Filterparameter anpassen. Wenn die Temperatur bei den letzten Werten mit der gleichen Geschwindigkeit gestiegen kann man zum Beispiel annehmen, dass die Geschwindigkeit gleich bleibt und die gleiche Steigung zu erwarten ist.

Die Kalibrierungsdauer in der Basisstation 3 ist länger als diejenige in dem Knoten 2, wodurch sich wiederum ein kleinerer Kalibrierungsrestfehler ergibt. Nach dem Empfang eines Pakets wird der Restfehler z.B. 3 ppm errechnet und deterministisch für mehrere Zeitpunkte des Empfangs von Datenpaketen 4 berücksichtigt.

Die Kalibrierung KAL2 zwischen der Frequenz des ersten Frequenzgebers 18 des Knotens 2 und der Frequenz des ersten Frequenzgebers 11 der Basisstation 3 kann auch auf Basis einer Schätzung mindestens eines Parameters des vom Kommunikationsmodul 17 ausgesendeten und vom Kommunikationsmodul 10 empfangenen Funksignals aus folgender Parameter-Gruppe
Trägerfrequenz und/oder
Bandbreite und/oder
Datenrate und/oder
Empfangszeit zwischen zwei Datenpaketen und/oder
Frequenzhub und/oder
Modulationsindex
durch das Kommunikationsmodul 10 in der Basisstation 3 ermittelt werden. Ein entsprechendes Verfahren ist in der DE 2016 014 375 A1 beschrieben.

Beispielsweise kann eine Schätzung auch auf Basis mehreren solcher Parameter z. B. auf Basis der Differenz zwischen zwei Trägerfrequenzen oder Empfangszeiten oder auf Basis einer gewichteten Mittelung mehrerer Werte wie z. B. auf Basis einer Filterung von N Trägerfrequenzen vorgenommen werden.

Mit dem vorgenannten Verfahren bzw. einer entsprechend betriebenen Basisstation 3 kann die Empfangsgenauigkeit der Basisstation 3 gesteigert und der Energieverbrauch deutlich reduziert werden. Dies wiederum ermöglicht eine verlängerte Lebensdauer einer energieautark betriebenen Basisstation 3. Ferner können einfachere und günstigere Mikroprozessoren für die Durchführung des Verfahrens verwendet werden.

### BEZUGSZEICHENLISTE

- 1: Kommunikationssystem
- 2: Knoten
- 3: Basisstation
- 4: Datenpaket
- 5: Datenpaket
- 6: Sende- und Empfangsteil
- 7: Antenne
- 8: Antenne
- 9: Anzeige
- 10: Kommunikationsmodul (Basisstation)
- 11: erster Frequenzgeber (Basisstation)
- 12: zweiter Frequenzgeber (Basisstation)
- 13: Mikroprozessor (Basisstation)
- 14: Empfangsfenster
- 15: Speicher
- 16: Energiequelle
- 17: Kommunikationsmodul (Knoten)
- 18: erster Frequenzgeber (Knoten)
- 19: Steuer- und Recheneinheit (Knoten)
- 21: zweiter Frequenzgeber (Knoten)

## Patentansprüche

1. Verfahren zum Übertragen von Daten, insbesondere Sensordaten, per Funk zwischen zumindest einem vorzugsweise dauerhaft ortsfest installierten Knoten (2) und einer Basisstation (3) in einem Kommunikationssystem (1) mit unidirektionalem oder bidirektionalem Funkübertragungsbetrieb,
wobei die Basisstation (3) ein Kommunikationsmodul (10) mit einem ersten Frequenzgeber (11) aufweist,
wobei der Knoten (2) ein Kommunikationsmodul (17) mit einem ersten Frequenzgeber (18) sowie einem zweiten Frequenzgeber (21) mit einer niedrigeren Frequenz als derjenigen des ersten Frequenzgebers (18) aufweist,
wobei das Kommunikationsmodul (17) des Knotens (2) dazu vorgesehen ist, Daten per Funktelegramme mittels Datenpaketen (4) an das Kommunikationsmodul (10) der Basisstation (3) zu senden,
wobei eine Trägerfrequenz für die Übertragung der Datenpakete (4) durch den ersten Frequenzgeber (18) generiert wird,
wobei das erste Kommunikationsmodul (10) der Basisstation (3) zum Empfang der Datenpakete (4) temporär ein Empfangsfenster (14) geöffnet wird,
wobei das erste Kommunikationsmodul (10) der Basisstation (3) dazu vorgesehen ist, innerhalb des Empfangsfensters (14) die Datenpakete (4) von dem Kommunikationsmodul (17) des Knotens (2) zu empfangen, und
wobei eine Kalibrierung zwischen der Frequenz des ersten Frequenzgebers (18) sowie zweiten Frequenzgebers (21) des Knotens (2) erfolgt,
wobei die Basisstation (3) die Datenpakete (4) von dem Knoten (2) auf der Trägerfrequenz erwartet,
die Basisstation (3) dafür aus den empfangenen Datenpaketen (4) die Trägerfrequenz schätzt und daraus die Abweichung zwischen der Frequenz des ersten Frequenzgebers (18) des Knotens (2) und der Frequenz des ersten Frequenzgebers (11) der Basisstation (3) feststellt,
die Basisstation (3) hierzu die Abweichung zwischen der Frequenz des ersten Frequenzgebers (18) des Knotens (2) und der Frequenz des ersten Frequenzgebers (11) der Basisstation (3) fortlaufend abspeichert, und
eine Kalibrierung (KAL2) zwischen der Frequenz des ersten Frequenzgebers (18) des Knotens (2) und der Frequenz des ersten Frequenzgebers (11) der Basisstation (3) erfolgt.

2. Verfahren nach Anspruch 1, **dadurch gekennzeichnet, dass** in Abhängigkeit der Kalibrierung (KAL2) das Empfangsfenster (14) hinsichtlich seiner Länge (L) festgelegt und/oder angepasst wird.

3. Verfahren nach den vorhergehenden Ansprüchen, **dadurch gekennzeichnet, dass** die Größe des Empfangsfensters (14) die dreimalige Länge des in dem Empfangsfenster (14) zu empfangenden Datenpakets (4) nicht übersteigt.

4. Verfahren nach den vorhergehenden Ansprüchen, **dadurch gekennzeichnet, dass** innerhalb des Empfangsfensters (14), vorzugsweise von der Mitte (P) desselben aus, eine Suche nach dem Paket (4) vor und/oder zurück gestartet wird, bis das betreffende Paket (4, 5) gefunden ist.

5. Verfahren nach Anspruch 4, **dadurch gekennzeichnet, dass** eine Suche bei mehreren Empfangsfenstern (14) und/oder Paketen (4) nacheinander durchgeführt wird und die Ergebnisse der Suche in Relation zueinander gesetzt werden.

6. Verfahren nach den vorhergehenden Ansprüchen, **dadurch gekennzeichnet, dass** ein nachfolgendes Empfangsfenster (14) was die Kalibrierung anbelangt auf das zeitlich vorausgehende Empfangsfensters (14) bezogen.

7. Verfahren nach den vorhergehenden Ansprüchen, **dadurch gekennzeichnet, dass** die Basisstation (3) einen zweiten Frequenzgeber (12) aufweist und eine Kalibrierung (KAL3) des zweiten Frequenzgebers (12) der Basisstation (3) auf der Grundlage der Kalibrierung (KAL2) des ersten Frequenzgebers (11) der Basisstation (3) erfolgt.

8. Verfahren nach den vorhergehenden Ansprüchen, **dadurch gekennzeichnet, dass** für die Öffnung des Empfangsfensters (14) die Temperaturabhängigkeit des ersten Frequenzgebers (11) der Basisstation (3) berücksichtigt wird.

9. Verfahren nach Anspruch 7, **dadurch gekennzeichnet, dass** für die Öffnung des Empfangsfensters (14) die Temperaturabhängigkeit des zweiten Frequenzgebers (12) der Basisstation (3) berücksichtigt wird.

10. Verfahren nach den vorhergehenden Ansprüchen, **dadurch gekennzeichnet, dass** die Basisstation (3) mittels einer energieautarken Energiequelle (16), vorzugsweise mittels einer Batterie betrieben wird.

11. Verfahren nach den vorhergehenden Ansprüchen, **dadurch gekennzeichnet, dass** die energieautarke Energiequelle (16) eine Leistung von maximal 80 Ah aufweist.

12. Verfahren nach den vorhergehenden Ansprüchen, **dadurch gekennzeichnet, dass** der Basisstation (3) die Sendezeitpunkte ts des jeweiligen Knotens (2) bekannt sind.

13. Verfahren nach Anspruch 7, **dadurch gekennzeichnet, dass** die Dauer der Kalibrierung (KAL3) des zweiten Frequenzgebers (12) in der Basisstation (3) länger ist als die Kalibrierung (KAL1) des zweiten Frequenzgebers (21) im Knoten (2).

14. Verfahren nach den vorhergehenden Ansprüchen, **dadurch gekennzeichnet, dass** die Kalibrierung (KAL2) zwischen der Frequenz des ersten Frequenzgebers (18) des Knotens (2) und der Frequenz des ersten Frequenzgebers (11) der Basisstation (3) auf Basis einer Schätzung mindestens eines Parameters des vom Kommunikationsmodul (17) des Knotens (2) ausgesendeten und vom Kommunikationsmodul (10) der Basisstation (3) empfangenen Funksignals aus folgender Parameter-Gruppe
Trägerfrequenz und/oder
Bandbreite und/oder
Datenrate und/oder
Empfangszeit zwischen zwei Datenpaketen und/oder
Frequenzhub und/oder
Modulationsindex
durch das Kommunikationsmodul (10) in der Basisstation (3) ermittelt wird.

15. Verfahren nach den vorhergehenden Ansprüchen, **dadurch gekennzeichnet, dass** für die Öffnung des Empfangsfensters (14) ein Restfehler der Kalibrierung (KAL1) und/oder (KAL2) berücksichtigt wird.

16. Kommunikationssystem mit unidirektionalem oder bidirektionalem Funkübertragungsprinzip zur Übertragung von Daten, umfassend
eine Basisstation (3) mit einem Mikroprozessor (13), sowie eine Mehrzahl von Knoten (2),
**dadurch gekennzeichnet, dass**
die Basisstation (3) und die Mehrzahl von Knoten (2) derart konfiguriert sind, dass die Datenübertragung gemäß mindestens einem der Verfahren gemäß den Ansprüchen 1 bis 15 durchführbar ist.

## Claims

1. Method for transmitting data, in particular sensor data, by radio between at least one node (2), which is preferably installed permanently at a fixed location, and a base station (3) in a communication system (1) having a unidirectional or bidirectional radio transmission mode,
wherein the base station (3) comprises a communication module (10) having a first frequency transmitter (11), wherein the node (2) comprises a communication module (17) having a first frequency transmitter (18) and a second frequency transmitter (21) with a lower frequency than that of the first frequency transmitter (18), wherein the communication module (17) of the node (2) is intended to use radio telegrams to transmit data to the communication module (10) of the base station (3) by means of data packets (4),
wherein a carrier frequency is generated for the transmission of the data packets (4) by the first frequency transmitter (18),
wherein the first communication module (10) of the base station (3) a reception window (14) is temporarily opened to receive the data packets (4),
wherein the first communication module (10) of the base station (3) is intended to receive the data packets (4) from the communication module (17) of the node (2) within the reception window (14), and
wherein a calibration is performed between the frequency of the first frequency transmitter (18) and that of the second frequency transmitter (21) of the node (2), wherein the base station (3) expects the data packets (4) from the node (2) on the carrier frequency,
to this end the base station (3) uses the received data packets (4) to estimate the carrier frequency and uses this to determine the variance between the frequency of the first frequency transmitter (18) of the node (2) and the frequency of the first frequency transmitter (11) of the base station (3),
the base station (3) moreover continually stores the variance between the frequency of the first frequency transmitter (18) of the node (2) and the frequency of the first frequency transmitter (11) of the base station (3), and
a calibration (KAL2) is performed between the frequency of the first frequency transmitter (18) of the node (2) and the frequency of the first frequency transmitter (11) of the base station (3).

2. Method according to Claim 1, **characterized in that** the calibration (KAL2) is taken as a basis for defining and/or adapting the reception window (14) in terms of its length (L).

3. Method according to the preceding claims, **characterized in that** the size of the reception window (14) does not exceed three times the length of the data packet (4) that is to be received in the reception window (14) .

4. Method according to the preceding claims, **characterized in that** a search for the packet (4) backwards and/or forwards is started within the reception window (14), preferably from the middle (P) thereof, until the relevant packet (4, 5) is found.

5. Method according to Claim 4, **characterized in that** a search is performed with regard to multiple reception windows (14) and/or packets (4) in succession and the results of the search are compared with one another.

6. Method according to the preceding claims, **characterized in that** a subsequent reception window (14) based on the preceding reception window (14) as far as the calibration is concerned.

7. Method according to the preceding claims, **characterized in that** the base station (3) comprises a second frequency transmitter (12) and a calibration (KAL3) of the second frequency transmitter (12) of the base station (3) is performed on the basis of the calibration (KAL2) of the first frequency transmitter (11) of the base station (3).

8. Method according to the preceding claims, **characterized in that** the temperature dependency of the first frequency transmitter (11) of the base station (3) is taken into consideration for opening the reception window (14).

9. Method according to Claim 7, **characterized in that** the temperature dependency of the second frequency transmitter (12) of the base station (3) is taken into consideration for opening the reception window (14).

10. Method according to the preceding claims, **characterized in that** the base station (3) is operated by means of an energy-autonomous energy source (16), preferably by means of a battery.

11. Method according to the preceding claims, **characterized in that** the energy-autonomous energy source (16) has a capacity of no more than 80 Ah.

12. Method according to the preceding claims, **characterized in that** the base station (3) knows the transmission times ts of the respective node (2).

13. Method according to Claim 7, **characterized in that** the duration of the calibration (KAL3) of the second frequency transmitter (12) in the base station (3) is longer than the calibration (KAL1) of the second frequency transmitter (21) in the node (2).

14. Method according to the preceding claims, **characterized in that** the calibration (KAL2) between the frequency of the first frequency transmitter (18) of the node (2) and the frequency of the first frequency transmitter (11) of the base station (3) is ascertained by the communication module (10) in the base station (3) on the basis of an estimate of at least one parameter of the radio signal transmitted by the communication module (17) of the node (2) and received by the communication module (10) of the base station (3) from the following group of parameters
carrier frequency and/or
bandwidth and/or
data rate and/or
reception time between two data packets and/or
frequency swing and/or
modulation index.

15. Method according to the preceding claims, **characterized in that** a residual error of the calibration (KAL1) and/or (KAL2) is taken into consideration for opening the reception window (14).

16. Communication system having a unidirectional or bidirectional radio transmission principle for transmitting data, comprising
a base station (3) having a microprocessor (13), and a plurality of nodes (2),
**characterized in that**
the base station (3) and the plurality of nodes (2) are configured in such a way that the data transmission can be carried out according to at least one of the methods according to Claims 1 to 15.

## Revendications

1. Procédé de transmission de données, notamment de données de capteur, par radio entre au moins un noeud (2), de préférence installé durablement de manière fixe, et une station de base (3) dans un système de communication (1) avec un mode de transmission radioélectrique unidirectionnel ou bidirectionnel,
la station de base (3) possédant un module de communication (10) comprenant un premier transmetteur de fréquence (11),
le noeud (2) possédant un module de communication (17) comprenant un premier transmetteur de fréquence (18) ainsi qu'un deuxième transmetteur de fréquence (21) ayant une fréquence plus basse que celle du premier transmetteur de fréquence (18),
le module de communication (17) du noeud (2) étant conçu pour émettre des données par télégramme radioélectrique au moyen de paquets de données (4) au module de communication (10) de la station de base (3),
une fréquence porteuse pour la transmission des paquets de données (4) étant générée par le premier transmetteur de fréquence (18),
le premier module de communication (10) de la station de base (3) une fenêtre de réception (14) étant ouverte temporairement pour la réception des paquets de données (4),
le premier module de communication (10) de la station de base (3) étant conçu pour recevoir les paquets de données (4) de la part du module de communication (17) du noeud (2) au sein de la fenêtre de réception (14), et
un calibrage étant effectué entre la fréquence du premier transmetteur de fréquence (18) ainsi que du deuxième transmetteur de fréquence (21) du noeud (2),
la station de base (3) attendant les paquets de données (4) de la part du noeud (2) sur la fréquence porteuse,
la station de base (3) estimant à cet effet la fréquence porteuse à partir des paquets de données (4) reçus et spécifiant à partir de celle-ci l'écart entre la fréquence du premier transmetteur de fréquence (18) du noeud (2) et la fréquence du premier transmetteur de fréquence (11) de la station de base (3),
la station de base (3) mémorisant à cet effet en continu l'écart entre la fréquence du premier transmetteur de fréquence (18) du noeud (2) et la fréquence du premier transmetteur de fréquence (11) de la station de base (3), et
un calibrage (KAL2) étant effectué entre la fréquence du premier transmetteur de fréquence (18) du noeud (2) et la fréquence du premier transmetteur de fréquence (11) de la station de base (3).

2. Procédé selon la revendication 1, **caractérisé en ce que** la fenêtre de réception (14) est spécifiée et/ou adaptée du point de vue de sa longueur (L) en fonction du calibrage (KAL2).

3. Procédé selon les revendications précédentes, **caractérisé en ce que** la taille de la fenêtre de réception (14) ne dépasse pas le triple de la longueur du paquet de données (4) à recevoir dans la fenêtre de réception (14) .

4. Procédé selon les revendications précédentes, **caractérisé en ce qu'**à l'intérieur de la fenêtre de réception (14), de préférence à partir du centre (P) de celle-ci, est lancée une recherche d'un paquet (4) vers l'avant et/ou l'arrière jusqu'à ce que le paquet (4, 5) concerné soit trouvé.

5. Procédé selon la revendication 4, **caractérisé en ce qu'**une recherche est effectuée pour plusieurs fenêtres de réception (14) et/ou paquets (4) les uns après les autres et les résultats de la recherche sont mis en relation entre eux.

6. Procédé selon les revendications précédentes, **caractérisé en ce qu'**une fenêtre de réception (14) suivante se référant à la fenêtre de réception (14) précédente dans le temps pour ce qui concerne le calibrage.

7. Procédé selon les revendications précédentes, **caractérisé en ce que** la station de base (3) possède un deuxième transmetteur de fréquence (12) et un calibrage (KAL3) du deuxième transmetteur de fréquence (12) de la station de base (3) s'effectue sur la base du calibrage (KAL2) du premier transmetteur de fréquence (11) de la station de base (3).

8. Procédé selon les revendications précédentes, **caractérisé en ce que** la dépendance à la température du premier transmetteur de fréquence (11) de la station de base (3) est prise en compte pour l'ouverture de la fenêtre de réception (14).

9. Procédé selon la revendication 7, **caractérisé en ce que** la dépendance à la température du deuxième transmetteur de fréquence (12) de la station de base (3) est prise en compte pour l'ouverture de la fenêtre de réception (14).

10. Procédé selon les revendications précédentes, **caractérisé en ce que** la station de base (3) fonctionne au moyen d'une source d'énergie (16) à autosuffisance énergétique, de préférence au moyen d'une batterie.

11. Procédé selon les revendications précédentes, **caractérisé en ce que** la source d'énergie (16) à autosuffisance énergétique présente une puissance maximale de 80 Ah.

12. Procédé selon les revendications précédentes, **caractérisé en ce que** les instants d'émission ts des noeuds (2) respectifs sont connus de la station de base (3) .

13. Procédé selon la revendication 7, **caractérisé en ce que** la durée du calibrage (KAL3) du deuxième transmetteur de fréquence (12) de la station de base (3) est plus longue que celle du calibrage (KAL1) du deuxième transmetteur de fréquence (21) dans le noeud (2).

14. Procédé selon les revendications précédentes, **caractérisé en ce que** le calibrage (KAL2) entre la fréquence du premier transmetteur de fréquence (18) du noeud (2) et la fréquence du premier transmetteur de fréquence (11) de la station de base (3) est déterminé par le module de communication (10) dans la station de base (3) sur la base d'une estimation d'au moins un paramètre du signal radioélectrique émis par le module de communication (17) du noeud (2) et reçu par le module de communication (10) de la station de base (3), issu du groupe de paramètres suivant
fréquence porteuse et/ou
largeur de bande et/ou
débit de données et/ou
temps de réception entre deux paquets de données et/ou
excursion de fréquence et/ou
indice de modulation.

15. Procédé selon les revendications précédentes, **caractérisé en ce qu'**une erreur résiduelle du calibrage (KAL1) et/ou (KAL2) est prise en compte pour l'ouverture de la fenêtre de réception (14).

16. Système de communication ayant le principe de transmission radioélectrique unidirectionnel ou bidirectionnel, comprenant
une station de base (3) pourvue d'un microprocesseur (13) ainsi
qu'une pluralité de noeuds (2),
**caractérisé en ce que**
la station de base (3) et la pluralité de noeuds (2) sont configurés de telle sorte que la transmission de données peut être réalisée conformément à au moins un procédé selon les revendications 1 à 15.
